# EUROPÄISCHE PATENTSCHRIFT

(11) **EP 3 262 315 B1**
(45) Veröffentlichungstag und Bekanntmachung des Hinweises auf die Patenterteilung: **07.04.2021**
(21) Anmeldenummer: 16717547.0
(22) Anmeldetag: 22.02.2016
(51) Int. Cl.: F16D 69/02, F16D 13/64

(54) **REIBBELAG**
FRICTION LINING
GARNITURE DE FRICTION

(30) Priorität: 23.02.2015 DE 102015203153
(43) Veröffentlichungstag der Anmeldung: 03.01.2018
(73) Patentinhaber: Schaeffler Technologies AG & Co. KG, 91074 Herzogenaurach (DE)
(72) Erfinder: DEITERS, Ralf, 54421 Reinsfeld (DE)
(86) Internationale Anmeldenummer: PCT/DE2016/200102
(87) Internationale Veröffentlichungsnummer: WO 2016/134715

(56) Entgegenhaltungen:
- EP-A1- 2 154 112
- DE-A1-102009 015 152
- GB-A- 2 148 423
- US-A- 3 114 197
- US-A- 4 605 105
- US-A- 5 891 933

## Beschreibung

Die Erfindung betrifft einen Reibbelag mit mindestens einem Garn, das Garnkomponenten umfasst und in eine Reibbelagschicht eingebettet ist. Die Erfindung betrifft gegebenenfalls auch ein Verfahren zum Herstellen eines vorab beschriebenen Reibbelags.

Die Offenlegungsschrift DE 10 2009 015 152 A1 offenbart einen Reibbelag für eine Reibungskupplung der Edelstahlfasern aufweist, mit 10 Gewichtsprozent Kupferdraht und 60 Gewichtsprozent Glasfasern.
Die Offenlegungschrift EP 2 154 112 A1 offenbart als Bestandteil eines Reibmaterials unter anderem Aramidfasern, Stahlfasern, Messingfasern und Glasfasern, als Binder unter anderem Acrylgummi und als inorganische Pulver unter anderem Kupferpulver, wobei der Binder mit einem Anteil von 5 bis 60 Gewichtsprozent, Reibmodifizierer mit einem 1 - 80 % Gewichtsprozent, Fasermaterial mit bis zu 60 Gewichtsprozent und andere Zusätze mit bis zu 60 Gewichtsprozent am Gesamtgewicht des Reibmaterials zur Herstellung vorgesehen sind.

Aus der internationalen Veröffentlichung WO 2007/121704 A2 ist ein zweischichtiger Kupplungsbelag bekannt, der ein Reibteil, welches eine Reibungsfläche bildet und ein Verstärkungsteil aufweist, wobei das Verstärkungsteil aus einem Verstärkungsgarn gewickelt ist und das Reibteil aus einem Reibgarn gewickelt ist und das Reibgarn bessere Reib- und/oder Verschleißeigenschaften aufweist als das Verstärkungsgarn. Aus der deutschen Patentschrift DE 19712 203 B4 ist ein Reibbelag, insbesondere für Kupplungsscheiben oder Bremsen, bekannt, beispielsweise für Kraftfahrzeuge, welcher im Wesentlichen kreisringförmig ausgestaltet ist und aus einem im Wesentlichen kreisringförmigen Trägerelement sowie aus einem auf dieses Trägerelement aufgebrachten Reibmaterial besteht, wobei der Reibbelag vorzugsweise ein massengepresster Reibbelag ist, der beispielsweise durch ein Heißpressverfahren aus einer Pulvermischung in einer Form gefertigt wird.

Aufgabe der Erfindung ist es, einen Reibbelag mit mindestens einem Garn, das Garnkomponenten umfasst und in eine Reibbelagschicht eingebettet ist, zu schaffen, der verbesserte Reibeigenschaften aufweist.

Diese Aufgabe wird durch einen Reibbelag mit den Merkmalen gemäß Anspruch 1 gelöst.

Die Aufgabe ist also bei einem Reibbelag mit mindestens einem Garn, das Garnkomponenten umfasst und in eine Reibbelagschicht eingebettet ist, dadurch gelöst, dass eine der Garnkomponenten aus einem Edelstahlmaterial gebildet ist. Der erfindungsgemäße Reibbelag kann eine Reibbelagschicht umfassen, kann aber auch mehrere Reibbelagschichten umfassen. Durch das Edelstahlmaterial kann die Reibbelagperformance, insbesondere bezüglich ihrer tribologischen Eigenschaften, auf einfache Art und Weise optimiert werden.

Der Reibbelag ist erfindungsgemäß dadurch gekennzeichnet, dass das Garn ein erstes Vorgarn umfasst, das Edelstahlfasern enthält. Ein Vorgarn ist eine Vorstufe in der Garnherstellung. Bei der Garnherstellung werden Fasern aufbereitet und zu einem Garn gesponnen. Es gibt Vorgarne, die nur aus einem Ausgangsmaterial bestehen. Das Vorgarn kann auch eine Mischung aus verschiedenen Fasern umfassen.

Ein weiteres bevorzugtes Ausführungsbeispiel des Reibbelags ist dadurch gekennzeichnet, dass das Vorgarn einen Edelstahlfaseranteil von etwa zehn Prozent aufweist, dass das Vorgarn einen Acrylfaseranteil von etwa vierzig Prozent aufweist und/oder, dass das Vorgarn einen Aramidfaseranteil von etwa fünfzig Prozent aufweist. Die Voranstellung des Begriffes etwa bedeutet, dass die Prozentangaben um bis zu plus/minus fünf Prozent vom angegebenen Wert abweichen können. Bei den angegebenen Prozenten handelt es sich um Gewichtsprozente in der Reibbelagschicht. Gemäß einem weiteren Aspekt der Erfindung umfasst das Vorgarn genau die angegebenen prozentualen Anteile. Gemäß einem weiteren Aspekt der Erfindung enthält der Aramidfaseranteil Para-Aramidfasern.

Ein weiteres bevorzugtes Ausführungsbeispiel des Reibbelags ist dadurch gekennzeichnet, dass das erste Vorgarn mit den Edelstahlfasern ein Gewicht von etwa 0,285 Gramm pro Meter hat. Der Begriff etwa bedeutet in Zusammenhang mit dem Gewicht des Vorgarns, dass Abweichungen von plus/minus fünf Prozent des angegebenen Gewichts möglich sind. Gemäß einem weiteren Aspekt der Erfindung hat das Vorgarn mit den Edelstahlfasern genau das angegebene Gewicht.

Ein weiteres bevorzugtes Ausführungsbeispiel des Reibbelags ist dadurch gekennzeichnet, dass das erste Vorgarn mit den Edelstahlfasern eine Drehungszahl von etwa 150 bis 170 pro Meter hat. Dieser Drehungszahlbereich hat sich bei im Rahmen der vorliegenden Erfindung durchgeführten Untersuchungen als besonders vorteilhaft erwiesen.

Der Reibbelag ist erfindungsgemäß dadurch gekennzeichnet, dass das Garn ein Glasfaser-Vorgarn umfasst. Das Glasfaser-Vorgarn wird auch als Glasfaserroving, verkürzt auch als Glasroving, bezeichnet.

Der Reibbelag ist erfindungsgemäß dadurch gekennzeichnet, dass das Garn Kupferdraht umfasst. Anstelle von Kupferdraht kann gemäß einem weiteren Aspekt der Erfindung auch Messingdraht verwendet werden.

Der Reibbelag ist erfindungsgemäß dadurch gekennzeichnet, dass das Garn etwa sechzig Prozent Glasroving, etwa zehn Prozent Kupferdraht und etwa dreißig Prozent des ersten Vorgarns umfasst. Der Begriff etwa bedeutet, dass die angegebenen Prozentangaben um plus/minus fünf Prozent abweichen können.
Gemäß einem weiteren Aspekt der Erfindung umfasst das Garn genau sechzig Prozent Glasroving, genau zehn Prozent Kupferdraht und genau dreißig Prozent des ersten Vorgarns.

Ein weiteres bevorzugtes Ausführungsbeispiel des Reibbelags ist dadurch gekennzeichnet, dass das Garn zusätzlich ein weiteres Vorgarn aus einhundert Prozent Acrylfasern enthält. Das Garn umfasst gemäß einem weiteren Aspekt der Erfindung sowohl das erste Vorgarn mit den Edelstahlfasern als auch das weitere Vorgarn aus den Acrylfasern.

Das Edelstahlmaterial wird gemäß einem weiteren Aspekt der Erfindung mittels Endlosgarn in einen gewickelten Reibbelag eingebracht. Gemäß einem weiteren Aspekt der Erfindung wird das Edelstahlmaterial als separater Mischungsbestandteil in einen massegepressten Reibbelag eingebracht.

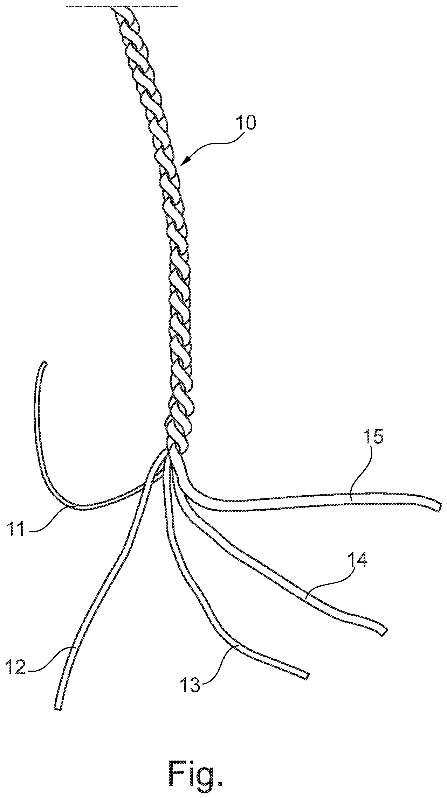

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

In der einzigen beiliegenden Figur ist ein erfindungsgemäßes Garn dargestellt, das fünf Garnkomponenten umfasst.

Die einzige beiliegende Figur zeigt ein Garn 10, das insgesamt fünf Garnkomponenten 11, 12, 13, 14, 15 umfasst. Das Garn 10 dient zur Herstellung eines (nicht dargestellten) Reibbelags.

Bei dem Reibbelag handelt es sich vorzugsweise um einen Kupplungsbelag zur Verwendung in trockenlaufenden Kupplungen, zum Beispiel manuellen beziehungsweise automatisierten Kupplungen, insbesondere Doppelkupplungen.

Durch das Garn 10 werden die Eigenschaften des Kupplungsbelags hinsichtlich einem höheren Reibwertniveau, einer Fadingcharakteristik, sowie hinsichtlich Komfort und Verschleiß verbessert.

Die Garnkomponente 11 ist aus einem Kupfermaterial gebildet. Das Kupfermaterial liegt zum Beispiel in Form von Kupferdraht oder Kupferdrahtfasern vor. Bei der Garnkomponente 12 handelt es sich um einen Glasroving. Bei der Garnkomponente 13 handelt es sich um ein Vorgarn aus zum Beispiel hundert Prozent Acryl.

Bei der Garnkomponente 14 handelt es sich um ein Vorgarn aus Aramidfasern, Acrylfasern und Edelstahlfasern. Zur Herstellung des Vorgarns 14 werden zum Beispiel Aramid, Acryl und die Edelstahlfasern in einem vorgelagerten Prozess gemischt und dann zu dem Vorgarn gesponnen. Das Vorgarn 14 kann alternativ aus Aramidfasern, Acrylfasern und Edelstahlfasern in einem Kablierprozess zu einem Kabliergarn zusammengebracht werden.

Das Edelstahlmaterial wird vorzugsweise in Form von Edelstahlfasern verwendet, die einen Durchmesser von acht Mikrometern aufweisen. Die verwendeten Edelstahlfasern haben eine Reißfestigkeit von sechs centiNewton und ein spezifisches Gewicht von 8,03 Kubikzentimetern. Die beschriebenen Edelstahlfasern werden gemäß einem Aspekt der Erfindung im Reibbelag verwendet, um die Belageigenschaften zu verbessern.

Die Edelstahlfasern werden in dem Vorgarn 14 verwendet. Das Vorgarn 14 umfasst dann vorteilhaft zehn Prozent der vorab beschriebenen Edelstahlfasern. Darüber hinaus umfasst das Vorgarn 14 vierzig Prozent Acryl beziehungsweise Acrylfasern. Darüber hinaus umfasst das Vorgarn 14 fünfzig Prozent Para-Aramidfasern.

Das Gewicht des Vorgarns 14 beträgt 0,285 Gramm pro Meter. Die Drehungszahl des Vorgarns 14 beträgt hundertfünfzig bis hundertsiebzig pro Meter. Die Drehungszahl bezeichnet die Drehung der Komponenten im Kabliergarn pro Meter.

Das Garn umfasst zum Beispiel sechzig Prozent Glasroving 12, zehn Prozent Kupferdraht 11 und dreißig Prozent des vorab beschriebenen Vorgarns 14.

Bei der Garnkomponente 15 handelt es sich um eine optionale Garnkomponente, die zum Beispiel Viskose umfasst. Die optionale Garnkomponente 15 kann aber auch ganz weggelassen werden.

### Bezugszeichenliste

10 Garn für Reibbelag
11 Garnkomponente
12 Garnkomponente
13 Garnkomponente
14 Garnkomponente
15 Garnkomponente

## Patentansprüche

1. Reibbelag mit mindestens einem Garn (10), das Garnkomponenten (11-15) umfasst und in eine Reibbelagschicht eingebettet ist, wobei eine der Garnkomponenten (11-15) aus einem Edelstahlmaterial gebildet ist,
**dadurch gekennzeichnet, dass** das Garn (10) ein erstes Vorgarn (14) umfasst, das Edelstahlfasern enthält, wobei ein Vorgarn eine Vorstufe bei der Herstellung des Garns (10) ist, wobei das Garn (10) ein Glasfaser-Vorgarn (12) umfasst, und wobei das Garn (10) Kupferdraht (11) umfasst, und wobei das Garn (10) etwa sechzig Prozent Glasfaser-Vorgarn (12), etwa zehn Prozent Kupferdraht (11) und etwa dreißig Prozent des ersten Vorgarns (14) umfasst, wobei es sich bei den angegebenen Prozenten um Gewichtsprozente handelt.

2. Reibbelag nach Anspruch 1, **dadurch gekennzeichnet, dass** das erste Vorgarn (14) einen Edelstahlfaseranteil von etwa zehn Prozent aufweist, dass das erste Vorgarn (14) einen Acrylfaseranteil von etwa vierzig Prozent aufweist und/oder, dass das erste Vorgarn (14) einen Aramidfaseranteil von etwa fünfzig Prozent aufweist.

3. Reibbelag nach Anspruch 1 oder 2, **dadurch gekennzeichnet, dass** das erste Vorgarn (14) mit den Edelstahlfasern ein Gewicht von etwa 0,285 Gramm pro Meter hat.

4. Reibbelag nach einem der Ansprüche 1 bis 3, **dadurch gekennzeichnet, dass** das erste Vorgarn (14) mit den Edelstahlfasern eine Drehungszahl von etwa 150 bis 170 pro Meter hat.

5. Reibbelag nach einem der vorhergehenden Ansprüche, **dadurch gekennzeichnet, dass** das Garn (10) zusätzlich ein weiteres Vorgarn (13) aus einhundert Prozent Acrylfasern enthält.

## Claims

1. A friction lining having at least one yarn (10) which comprises yarn components (11-15) and is embedded in a friction lining layer, wherein one of the yarn components (11-15) is formed from a stainless steel material,
**characterized in that** the yarn (10) comprises a first roving (14) containing stainless steel fibres, wherein a roving is a preliminary stage in the manufacture of the yarn (10), wherein the yarn (10) comprises a glass fibre roving (12), and wherein the yarn (10) comprises copper wire (11), and wherein the yarn (10) comprises approximately sixty percent glass fibre roving (12), approximately ten percent copper wire (11) and approximately thirty percent of the first roving (14), wherein the stated percentages are percentages by weight.

2. The friction lining according to claim 1, **characterized in that** the first roving (14) has a stainless steel fibre content of approximately ten percent, that the first roving (14) has an acrylic fibre content of approximately forty percent and/or that the first roving (14) has an aramid fibre content of approximately fifty percent.

3. The friction lining according to claim 1 or 2, **characterized in that** the first roving (14) with the stainless steel fibres has a weight of approximately 0.285 grams per metre.

4. The friction lining according to any one of claims 1 to 3, **characterized in that** the first roving (14) with the stainless steel fibres has a twist number of approximately 150 to 170 per metre.

5. The friction lining according to any one of the preceding claims, **characterized in that** the yarn (10) additionally contains a further roving (13) made of one hundred percent acrylic fibres.

## Revendications

1. Garniture de friction comprenant au moins un fil (10) qui comprend des composants de fil (11-15) et qui est incorporé dans une couche de garniture de friction, dans laquelle l'un des composants de fil (11-15) est formé d'une matière en acier inoxydable,
**caractérisée en ce que** le fil (10) comprend une première mèche (14) qui contient des fibres d'acier inoxydable, dans laquelle une mèche est une étape préliminaire dans la fabrication du fil (10), dans laquelle le fil (10) comprend une mèche de fibre de verre (12) et dans laquelle le fil (10) comprend un fil de cuivre (11), et dans laquelle le fil (10) comprend environ soixante pour cent de mèches de fibres de verre (12), environ dix pour cent de fil de cuivre (11) et environ trente pour cent de la première mèche (14), dans laquelle les pourcentages indiqués sont des pourcentages en poids.

2. Garniture de friction selon la revendication 1, **caractérisée en ce que** la première mèche (14) présente une teneur en fibres d'acier inoxydable d'environ dix pour cent, **en ce que** la première mèche (14) présente une teneur en fibres acryliques d'environ quarante pour cent et/ou **en ce que** la première mèche (14) présente une teneur en fibres d'aramide d'environ cinquante pour cent.

3. Garniture de friction selon la revendication 1 ou 2, **caractérisée en ce que** la première mèche (14) avec les fibres d'acier inoxydable présente un poids d'environ 0,285 gramme par mètre.

4. Garniture de friction selon l'une quelconque des revendications 1 à 3, **caractérisée en ce que** la première mèche (14) avec les fibres en acier inoxydable présente un nombre de spires d'environ 150 à 170 par mètre.

5. Garniture de friction selon l'une quelconque des revendications précédentes, **caractérisée en ce que** le fil (10) contient en plus une mèche (13) supplémentaire contenant cent pour cent de fibres acryliques.
